Europäisches Patentamt

European Patent Office

Office européen des brevets

(19)

(11) Veröffentlichungsnummer: **0 017 736**
**B1**

(12) **EUROPÄISCHE PATENTSCHRIFT**

(45) Veröffentlichungstag der Patentschrift:
20.07.83

(51) Int. Cl.³: **B 60 R 21/08**

(21) Anmeldenummer: **80101013.3**

(22) Anmeldetag: **29.02.80**

---

(54) **Gasgenerator in Blechbauweise.**

---

(30) Priorität: **14.04.79 DE 2915202**

(43) Veröffentlichungstag der Anmeldung:
**29.10.80 Patentblatt 80/22**

(45) Bekanntmachung des Hinweises auf die Patenterteilung:
**20.07.83 Patentblatt 83/29**

(84) Benannte Vertragsstaaten:
**FR GB IT SE**

(56) Entgegenhaltungen:
**FR-A-2 212 799**
**FR-A-2 269 057**
**GB-A-2 022 194**
**US-A-3 871 684**
**US-A-4 131 299**

(73) Patentinhaber: **Bayern-Chemie Gesellschaft für flugchemische Antriebe mit beschränkter Haftung, D-8261 Aschau a. Inn (DE)**

(72) Erfinder: **Nilsson, Karl Erik, Ostpreussenstrasse 8, D-8012 Ottobrunn (DE)**
Erfinder: **Lampert, Armin, Dipl.-Ing., Merowingerstrasse 27, D-8011 Aschheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Gasgenerator in Blechbauweise

Die Erfindung bezieht sich auf einen Gasgenerator in Blechbauweise, insbesondere für das aufblasbare Schutzkissen eines Aufprallschutzsystems für Fahrzeuginsassen, mit einem eine Zündeinrichtung aufnehmenden Zentralrohr, einer ringförmigen, am Innenrand druckdicht mit dem Zentralrohr verbundenen Gehäuseschale zur Begrenzung einer das Zentralrohr umgreifenden, mit Treibstoff beladenen Reaktionskammer, einem die Reaktionskammer abschliessenden, am Aussenrand mit der Gehäuseschale und am Innenrand mit dem Zentralrohr druckdicht verbundenen Deckel und einer an die Reaktionskammer anschliessenden, mit dieser durch Übertrittsöffnungen verbundenen Expansions-, insbesondere Filterkammer, die mit Austrittsöffnungen für das nach aussen zu dem dem Gasgenerator nachgeschalteten Verbraucher ausströmende Treibgas versehen ist, wobei zumindest die Gehäuseschale einstückig durch spanlose Kaltverformung hergestellt und mindestens eine der Randverbindungen ein stoffschlüssiger, z.B. geschweisster, steifer Randknoten ist.

Bei Gasgeneratoren dieser Art gemäss einer nicht vorveröffentlichten Entwicklung der Anmelderin, die mit einer axialen Druckgasführung und einer entsprechenden, axialen Hintereinanderschaltung von Reaktions- und Filterkammer arbeiten, wird durch Verankerung der toroidförmigen Gehäuseschale und des von den Übertrittsöffnungen durchsetzten Deckels am Zentralrohr sowie durch die stoffschlüssigen, vorzugsweise als Elektronenstrahl-Schweissnaht ausgeführten Randverbindungen eine hochgradige, gegenseitige Versteifung der die Reaktionskammer begrenzenden, tragenden Gehäuseteile und somit eine merkliche Wandstärkenverringerung erzielt. Dennoch liegt bei dieser Bauart der Gewichtsanteil der tragenden Gehäuseteile am Gesamtgewicht des Gasgenerators unerwünscht hoch.

Ferner sind Gasgeneratoren mit einer radialen Druckgasführung bekannt (z.B. US-A-4 131 299), bei denen die Reaktions- und die diese radial umschliessende Filterkammer in einer gemeinsamen, aus Gehäuseschale und mit dieser verschraubtem Deckel bestehenden, tragenden Gehäusestruktur von im wesentlichen rechteckigem Querschnitt angeordnet sind. Bedingt durch die aus Festigkeitsgründen grossen Wandstärken der Gehäuseschale und des Deckels haben derartige Gasgeneratoren ein hohes Eigengewicht und sind trotz der Blechbauweise verhältnismässig kompliziert und kostspielig herzustellen, was vor allem bei der Grossserienfertigung ein gravierender Nachteil ist. Werden aber die die Filterkammer begrenzenden Gehäuseabschnitte als getrennte Blechteile geringerer Wandstärke ausgebildet, so müssen die in diesen vorhandenen, radial gerichteten Auslassöffnungen der Filterkammer – wiederum aus Festigkeitsgründen – so klein bemessen werden, dass dort das Druckgas mit hoher Strahlgeschwindigkeit und kleinem Strahl-Querschnittaustritt, was eine örtlich stark überhöhte Wärme- und Druckbelastung der den Druckgasstrahlen ausgesetzten Schutzkissen-Bereiche zur Folge hat.

Demgegenüber liegt der Erfindung die Aufgabe zugrunde, einen Gasgenerator der beanspruchten Art zu schaffen, der in festigkeits- und strömungsmässig wesentlich verbesserter Bauweise mit erheblich verringertem Eigengewicht in kostengünstiger Serienfertigung herzustellen ist.

Zur Lösung dieser Aufgabe ist der Gasgenerator der beanspruchten Art erfindungsgemäss dadurch gekennzeichnet, dass die Expansionskammer in Radialrichtung an die Reaktionskammer angrenzend und diese umschliessend und die Übertrittsöffnungen in der Gehäuseschale angeordnet sind, die Gehäuseschale als im Querschnitt S-förmiges, mit ihrem über die Reaktionskammer hinaus verlängerten Wandabschnitt die Expansionskammer nach aussen begrenzendes Bauteil ausgebildet ist und die Auslassöffnungen der Expansionskammer schlitzförmig in den verlängerten Wandabschnitt der Gehäuseschale eingestanzt sind.

Bei dem erfindungsgemässen Gasgenerator werden durch die radiale Zuordnung von Reaktions- und Expansionskammer und die S-förmige, über die Reaktionskammer hinaus verlängerte Querschnittsform der Gehäuseschale in Verbindung mit der zentralen Verankerung von Gehäuseschale und Deckel die für die Wandstärke der tragenden Gehäuseteile massgeblichen Kenngrössen und insbesondere die kritischen Abmessungen der Reaktionskammer gegenüber üblichen Gasgeneratoren mit gleichem Reaktionskammervolumen und gleichen Aussenabmessungen wesentlich verbessert und eine in hohem Masse formstabile Generatorkonstruktion mit drei konzentrischen, jeweils über bogenförmige Wandabschnitte gegenseitig verbundenen, ringförmigen Wandungen, nämlich dem Zentralrohr als innere Ringwandung, dem zwischen Reaktions- und Expansionskammer liegenden Gehäuseschalenabschnitt als mittlere Ringwandung und dem die Filterkammer radial nach aussen begrenzenden, verlängerten Gehäuseschalenabschnitt als äussere Ringwandung, erzielt und somit insgesamt eine erhebliche Wandstärkenverringerung und festigkeitsmässig überlegene Materialverteilung und -ausnutzung garantiert, wodurch neben einem geringen Eigengewicht auch eine kostengünstige Grossserienfertigung des Gasgenerators erreicht wird, mit der Besonderheit, dass durch das Einstanzen der schlitzförmigen, grossflächigen Auslassöffnungen in die einstückig und mit gleicher Wandstärke an die Gehäuseschale angeformte Verlängerung zum einen diese Verlängerung der Gehäuseschale an die geringere Druckbeaufschlagung der Expensions- bzw. Filterkammer angepasst und für die zwischen den Auslassschlitzen verbleibenden, rippenförmigen Stegabschnitte eine hinsichtlich der nach aussen gerichteten Druckkräfte hochgradig biegefeste Querschnittsgeometrie sichergestellt und zum anderen infolge der vergrösserten Auslassquerschnitte abströmseitig der Expansionskammer die Gasführung in diesem Bereich wesentlich günstiger gestaltet wird, wobei sich das Einstanzen der Auslassschlitze vor oder gleichzeitig mit der Kaltumformung der Gehäuseschale und deren Ausbildung gemeinsam mit der die Filterkammer begrenzenden Verlängerung als einstückiges Blechteil bei der Herstellung des Gasgenerators weiter festigungserleichternd und kostensenkend auswirkt. Der erfindungsgemässe Gasgenerator eignet sich daher bei geringem Eigengewicht, günstiger Gasführung und platzsparender Raumgeometrie in hervorragender Weise für eine rationelle Grossserienfertigung, und insbesondere als Treibgaserzeuger für das aufblasbare Aufprallschutzkissen für Fahrzeuginsassen.

In weiterer vorteilhafter Ausgestaltung der Erfindung weist der verlängerte Gehäuseschalenabschnitt vorzugsweise einen im wesentlichen U-förmigen, die Expansionskammer an drei Seiten begrenzenden Querschnitt auf, wodurch eine festigkeitsmässig noch günstigere Gestaltung der Gehäuseschale mit genügend Wandfläche für das Einstanzen vergrösserter Auslassöffnungen erzielt wird. In diesem Fall empfiehlt es sich aus Sicherheitsgründen und zum Schutz des dem Gasgenerator nachgeschalteten Treibgasverbrauchers, dass der Mittelsteg des U-förmigen Gehäuseschalenabschnitts dem Treibgasverbraucher zugekehrt ist, und vorzugsweise erstrecken sich die schlitzförmigen Auslassöffnungen bis in den Mittelsteg des U-förmigen Gehäuseschalenabschnitts hinein, wodurch der Durchflussquerschnitt der Auslassöffnungen weiter vergrössert und/oder die Austrittsrichtung des Druckgases aus der Expansionskammer gegenüber einer rein radialen Ausströmung modifiziert werden kann. Um die Fertigung der Gehäuseschale weiter zu vereinfachen, ohne dass die Auslassöffnungen nachträglich eingearbeitet werden müssen, ist die Gehäuseschale vorzugsweise als nach oder mit dem Einstanzen der Auslassöffnungen tiefgezogenes Blechteil ausgebildet.

Ferner sind aus Festigkeitsgründen zweckmässigerweise sämtliche Randverbindungen zwischen S-förmiger Gehäuseschale, Deckel und Zentralrohr als stoffschlüssige, steife Randknoten ausgebildet und eine ebenfalls festigkeitsmässig besonders günstige Raumform der am höchsten druckbelasteten Gehäuseteile besteht darin, dass der innere, die Reaktionskammer begrenzende Gehäuseschalenabschnitt gemeinsam mit dem Deckel zweckmässigerweise einen Teil eines annähernd kreisförmigen Toroids bildet.

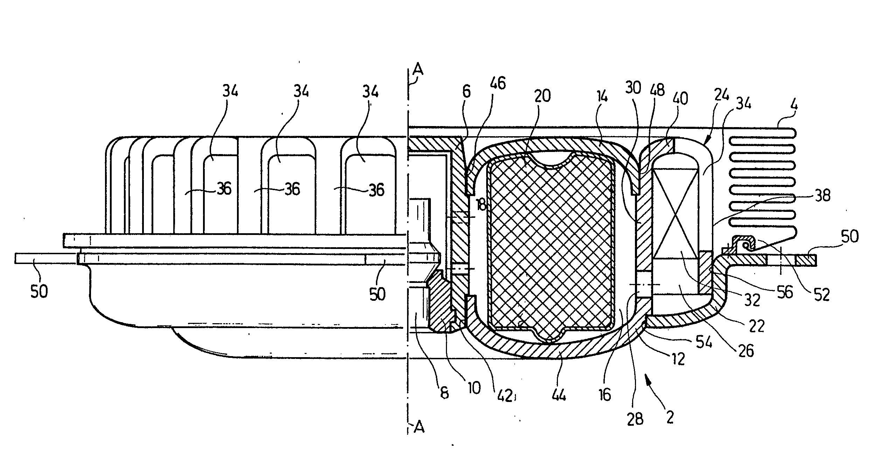

Die Erfindung wird nunmehr an Hand eines Ausführungsbeispiels in Verbindung mit der Zeichnung näher beschrieben, die in schematischer Darstellung eine teilweise geschnittene Seitenansicht eines Gasgenerators nach der Erfindung für das aufblasbare Schutzkissen eines Aufprallschutzsystems zeigt.

Der Gasgenerator 2, der durch ein zusammengefaltetes, aufblasbares Schutzkissen 4 nach oben abgedeckt ist, bildet gemeinsam mit einem nichtgezeigten Unfallsensor ein Aufprallschutzsystem für Fahrzeuginsassen und wird zum Beispiel im Lenkrad eines Personenkraftwagens untergebracht. Die Erfindung ist jedoch nicht auf diesen Anwendungsfall beschränkt, sondern allgemein zur Druck- oder Treibgaserzeugung, etwa zum Aufblasen von Schlauchbooten, verwendbar.

Als Hauptbestandteile enthält der Gasgenerator 2 ein nach oben verschlossenes Zentralrohr 6 zur Aufnahme einer etwa auf elektrischem Wege (durch den Unfallsensor) gezündeten Zündeinrichtung 8 mit einem am unteren Zentralrohrende formschlüssig, zum Beispiel durch Umbördeln, gesicherten Zündträger 10, eine zur zentralen Achse A–A rotationssymmetrische, im Querschnitt S-förmige Gehäuseschale 12, die gemeinsam mit einem ringförmigen zwischen Zentralrohr 6 und Gehäuseschale 12 im Querschnitt kreisbogenförmig verlaufenden Deckel 14 eine toroidförmige Reaktionskammer 16 begrenzt, die mit einem über radiale Zündöffnungen 18 im Zentralrohr 6 von der Zündeinrichtung 8 her angefeuerten Feststofftreibsatz 10 etwa in Granulat- oder Tablettenform bestückt ist, sowie ein ebenfalls ringförmiges, im Querschnitt gekrümmtes Abdeckblech 22 verringerter Wandstärke, das gemeinsam mit dem über die Reaktionskammer 16 hinaus bogenförmig verlängerten, im Querschnitt U-förmigen Gehäuseschalenabschnitt 24 eine in Radialrichtung an die Reaktionskammer 16 angrenzende und diese umschliessende Expansions- und Filterkammer 26 nach aussen begrenzt, der die heissen Reaktionsgase aus der Reaktionskammer 16 über Übertrittsöffnungen 28 in dem mittleren, zwischen Reaktions- und Expansionskammer 16, 26 liegenden Gehäuseschalenabschnitt 30 zuströmen, um dann unter merklicher Entspannung nach Passieren eines in der Expansionskammer 26 angeordneten Filters 32 über Auslassöffnungen 34 im äusseren Gehäuseschalenabschnitt 24 zum Schutzkissen 4 hin auszutreten.

Die Auslassöffnungen 34 sind als grossflächige, durch in Umfangsrichtung gleichförmig verteilte Zwischenstege 36 voneinander getrennte Schlitze in dem die Expansionskammer 26 radial nach aussen begrenzenden, im wesentlichen zylindrischen Teil 38 des verlängerten Gehäuseschalenabschnitts 24 ausgebildet und verlaufen bis in den dem Schtzkissen 4 axial zugekehrten Mittelsteg 40 dieses verlängerten, im Querschnitt U-förmig zurückgebogenen Gehäuseschalenabschnitts 24. Das Treibgas tritt daher aus der Expensionskammer 26 an jeder Auslassöffnung 34 als divergenter Strahl grossen Strahlquerschnitts und entsprechend niedriger Strahlgeschwindigkeit aus, so dass die während des Aufblasvorgangs unmittelbar angestrahlten Flächenbereiche des Schutzkissens 4 gross gehalten und örtlich überhöhte Druck- und Wärmebelastungen des Schutzkissens 4 unterbunden werden.

Die Randverbindung 42 zwischen dem unteren Zentralrohrende und dem inneren, bogenförmigen Gehäuseschalenabschnitt 44 ist ebenso wie die Randverbindung 46 zwischen dem Zentralrohr 6 und dem Innenrand des Deckels 14 und die Randverbindung 48 zwischen dem äusseren Deckelrand und dem mittleren Gehäuseschalenabschnitt 30 als stoffschlüssiger, steifer Randknoten in Form einer durchgehenden Ringschweissnaht, etwa einer Elektronenstrahl-Schweissnaht, ausgebildet. Auch das Abdeckblech 22, das mit mehreren, in Umfangsrichtung verteilten Befestigungslaschen 50 versehen und an dem der innere Randwulst des Schutzkissens 4 über einen im Querschnitt rechteckigen Haltering 52 gesichert ist, ist über Schweissnähte 54, 56 mit dem äusseren Randbereich des inneren Gehäuseschalenabschnitts 44 bzw. des radial äusseren, zylindrischen Teils 38 der Gehäuseschalenverlängerung 24 stoffschlüssig verbunden. Ebenfalls im Hinblick auf eine hohe Eigensteifigkeit bilden der Deckel 14 und der innere Gehäuseschalenabschnitt 44 Teile eines gemeinsamen, im Querschnitt annähernd kreisförmigen Toroids, und die gesamte tragende Gehäusekonstruktion des Gasgenerators 2 besteht demgemäss aus drei zur zentralen Achse A–A koaxialen, im wesentlichen zylindrischen Ringwandungen, nämlich der Mantelfläche des Zentralrohrs 6, dem mittleren Gehäuseschalenabschnitt 30 und dem radial äusseren, von den Auslassschlitzen 34 durchsetzten, zylindrischen Teil 38 des verlängerten Gehäuseschalenabschnitts 24, die jeweils durch einstückig angeformte oder stoffschlüssig befestigte, mehrfach gekrümmte Zwischenabschnitte, nämlich Deckel 14 und innerer Gehäuseschalenabschnitt 44 einerseits und Mittelssteg 40 bzw. Abdeckblech 22 anderseits, miteinander verbunden sind.

Wie bereits erwähnt, ermöglicht die beschriebene Bauweise des Gasgenerators 2 eine erhebliche Wandstärkenverringerung: so beträgt bei einem konkreten Ausführungsbeispiel des Gasgenerators 2 mit einer Gesamthöhe von etwa 35 mm, einem Durchmesser des Zentralrohrs 6 von etwa 20 mm, einem Durchmesser des mittleren Gehäuseabschnitts 30 von etwa 80 mm und einem Durchmesser des die Expansionskammer 26 radial nach aussen begrenzenden, zylindrischen Gehäuseschalenteils 38 von etwa 105 mm die Wandstärke des Deckels 14 und der Gehäuseschale 12 bei mittlerer Blechqualität durchgehend nur etwa 2,5 mm und die des geringer belasteten Abdeckblechs 22 etwa 1,5 mm. Sämtliche Gehäuseteile lassen sich in einfacher Weise als kaltverformte Blechteile herstellen und bedürfen einer allenfalls geringfügigen, spanenden Nachbearbeitung. So sind der Deckel 14 und das Abdeckblech 22 einfach verformte Stanzteile, und auch die gesamte Gehäuseschale 12 wird aus einer ebenen Blechplatte als einstückiges Tiefziehteil gefertigt, wobei die Auslassschlitze 34 und ggf. die Übertrittsöffnungen 28 gleich in die Blechplatte bei bzw. vor dem Tiefziehvorgang miteingestanzt werden und daher nicht nachträglich in die bereits ausgeformte Gehäuseschale eingearbeitet werden müssen. Aus Sicherheitsgründen wird die Zündeinrichtung 8 erst nach dem Zusammenbau der Gehäuseteile in das Zentralrohr 6 eingesetzt.

## Patentansprüche

1. Gasgenerator in Blechbauweise, insbesondere für das aufblasbare Schutzkissen eines Aufprallschutz-Systems für Fahrzeuginsassen, mit einem eine Zündeinrichtung (8) aufnehmenden Zentralrohr (6), einer ringförmigen, am Innenrand druckdicht mit dem Zentralrohr verbundenen Gehäuseschale (12) zur Begrenzung einer das Zentralrohr umgreifenden, mit Treibstoff beladenen Reaktionskammer (16), einem die Reaktionskammer abschliessenden, am Aussenrand mit der Gehäuseschale und am Innenrand mit dem Zentralrohr druckdicht verbundenen Deckel (14) und einer an die Reaktionskammer anschliessenden, mit dieser durch Übertrittsöffnungen (28) verbundenen Expansions-, insbesondere Filterkammer (26), die mit Austrittsöffnungen (34) für das nach aussen zu dem dem Gasgenerator nachgeschalteten Verbraucher ausströmende Treibgas versehen ist, wobei zumindest die Gehäuseschale einstückig durch spanlose Kaltverformung hergestellt und mindestens eine der Randverbindungen (42, 46, 48) ein stoffschlüssiger, zum Beispiel geschweisster, steifer Randknoten ist, dadurch gekennzeichnet, dass die Expansionskammer (26) in Radialrichtung an die Reaktionskammer (16) angrenzend und diese umschliessend und die Übertrittsöffnungen (28) in der Gehäuseschale (12) angeordnet sind, die Gehäuseschale (12) als im Querschnitt S-förmiges, mit ihrem über die Reaktionskammer (16) hinaus verlängerten Wandabschnitt (24) die Expansionskammer (26) nach aussen begrenzendes Bauteil ausgebildet ist und die Auslassöffnungen (34) der Expansionskammer (26) schlitzförmig in den verlängerten Wandabschnitt (24) der Gehäuseschale eingestanzt sind.

2. Gasgenerator nach Anspruch 1, dadurch gekennzeichnet, dass der verlängerte Gehäuseschalenabschnitt (24) einen im wesentlichen U-förmigen, die Expansionskammer (26) an drei Seiten begrenzenden Querschnitt aufweist.

3. Gasgenerator nach Anspruch 2, dadurch gekennzeichnet, dass der Mittelsteg (40) des U-förmigen Gehäuseschalenabschnitts (24) dem dem Gasgenerator (2) nachgeschalteten Treibgasverbraucher (4) zugekehrt ist.

4. Gasgenerator nach Anspruch 2 oder 3, dadurch gekennzeichnet, dass sich die schlitzförmigen Auslassöffnungen (34) bis in den Mittelsteg (40) des U-förmigen Gehäuseschalenabschnitts (24) hineinerstrecken.

5. Gasgenerator nach einem der vorhergehenden Ansprüche, dadurch gekennzeichnet, dass die Gehäuseschale (12) als nach oder mit dem Einstanzen der Auslassöffnungen (34) tiefgezogenes Blechteil ausgebildet ist.

6. Gasgenerator nach einem der vorhergehenden Ansprüche, dadurch gekennzeichnet, dass alle Randverbindungen (42, 46, 48) zwischen S-förmiger Gehäuseschale (12), Deckel (14) und Zentralrohr (6) als stoffschlüssige, steife Randknoten ausgebildet sind.

7. Gasgenerator nach einem der vorhergehenden Ansprüche, dadurch gekennzeichnet, dass der innere, die Reaktionskammer (16) begrenzende Gehäuseschalenabschnitt (44) gemeinsam mit dem Deckel (14) einen Teil eines annähernd kreisförmigen Toroids bildet.

**Claims**

1. A gas generator of sheet-metal construction, especially for the inflatable protective cushion of an impact protection system for occupants of vehicles, having a central tube (6) which accomodates an ignition device (8), an annular housing shell (12), connected at the inner edge in a pressure-tight manner to the central tube, for defining a reaction chamber (16) which surrounds the central tube and which is loaded with propellant, a lid (14) which seals off the reaction chamber and which is connected in a pressure-tight manner at the outer edge to the housing shell and at the inner edge to the central tube, and an expansion chamber, more particularly a filter chamber (26), which is adjacent to the reaction chamber and which is connected thereto by transfer orifices (28) and which is provided with outlet orifices (34) for the propellant gas flowing outwardly to the consumer which is connected subsequently to the gas generator, in which at least the housing shell is produced in one piece by non-cutting cold-working and at least one of the edge connections (42, 46, 48) is a material-defining, for example welded, stiff edge rim, characterised in that the expansion chamber (26) is contiguous with the reaction chamber (16) in the radial direction and surrounds the latter and the transfer orifices (28) are arranged in the housing shell (12), the housing shell (12) is designed as a component which is S-shaped in cross-section and which, with its wall portion (24) extended beyond the reaction chamber (16), defines the expansion chamber (26) outwardly, and the outlet orifices (34) of the expansion chamber (26) are punched, in slot form, into the extended wall portion (24) of the housing shell.

2. A gas generator according to claim 1, characterised in that the extended housing shell portion (24) has a substantially U-shaped cross-section which bounds the expansion chamber (26) on three sides.

3. A gas generator according to claim 2, characterised in that the central web (40) of the U-shaped housing shell portion (24) is directed towards the propellant gas consumer (4) which is connected subsequent to the gas generator (2).

4. A gas generator according to claim 2 or 3, characterised in that the slot-form outlet orifices (34) extend as far as into the central web (40) of the U-shaped housing shell portion (24).

5. A gas generator according to one of the preceding claims, characterised in that the housing shell (12) is designed as a sheet-metal part which is deep-drawn after or with the punching-in of the outlet orifices (34).

6. A gas generator according to one of the preceding claims, characterised in that all the edge connections (42, 46, 48) between the S-shaped housing shell (12), the lid (14) and the central tube (6) are formed as material-defining stiff edge rims.

7. A gas generator according to one of the preceding claims, characterised in that the inner housing shell portion (44) which bounds the reaction chamber (16) forms, jointly with the lid (14), part of an approximately circular toroid.

**Revendications**

1. Générateur de gaz en tôle, en particulier pour le coussin gonflable d'un système de protection mettant les occupants d'un véhicule à l'abri des chocs, constitué par un tube central (6) renfermant un dispositif d'allumage (8), par une partie de boîtier annulaire (12) lequel, étanche à la pression sur son bord interne et raccordé au tube central, délimite une chambre de réaction (16) entourant le tube central et remplie d'une charge propulsive, par un couvercle (14) fermant la chambre de réaction et raccordé de façon étanche à la pression, sur son bord extérieur, à la partie du boîtier et, sur son bord intérieur, au tube central, et par une chambre d'expansion, en particulier de filtrage (26), qui reliée à la chambre de réaction et communicant avec celle-ci, par des ouvertures de passage (19), est munie d'orifices de sortie (34) pour le gaz propulseur s'écoulant vers l'extérieur en direction de l'utilisateur monté en aval du générateur de gaz, au moins la partie du boîtier étant fabriquée d'une seule pièce par façonnage à froid sans enlèvement de copeaux et au moins l'un des raccordements marginaux (42, 46, 48) étant un nœud marginal rigide réalisé par assemblage par matière, par exemple par soudage, caractérisé par le fait que la chambre d'expansion (26) est adjacente à la chambre de réaction (16) dans le sens radial et entoure celle-ci, que les ouvertures de passage (28) sont pratiquées dans la partie de boîtier (12), que cette partie de boîtier (12) est réalisée sous la forme d'un élément de construction de section transversale en forme d'S qui, par son tronçon de paroi (24) prolongé au-delà de la chambre de réaction (16), délimite vers l'extérieur la chambre d'expansion (26) et que les orifices de sortie (34) de la chambre d'expansion (26) sont découpés en forme de fente dans le tronçon de paroi prolongé (24) de la partie de boîtier.

2. Générateur de gaz selon la revendication 1, caractérisé par le fait que le tronçon de paroi prolongé (24) de la partie de boîtier présente une section transversale sensiblement en forme d'U qui délimite la chambre d'expansion (26) sur trois côtés.

3. Générateur de gaz selon la revendication 2, caractérisé par le fait que l'âme (40) du tronçon de paroi (24) en forme d'U de la partie de boîtier est tournée vers l'utilisateur (4) de gaz propulseur monté en aval du générateur de gaz (2).

4. Générateur de gaz selon la revendication 2 ou 3, caractérisé par le fait que les orifices de sortie (34) en forme de fentes s'étendent jusque dans l'âme (40) du tronçon de paroi (24) en forme d'U de la partie de boîtier.

5. Générateur de gaz selon l'une des revendications précédentes, caractérisé par le fait que la partie de boîtier (12) est réalisée sous la forme d'une tôle emboutie profond après ou en même temps que le découpage des orifices de sortie (34).

6. Générateur de gaz selon l'une des revendications précédentes, caractérisé par le fait que tous les raccordements marginaux (42, 46, 48) entre la partie de boîtier (12) en forme d'S, le couvercle (14) et le tube central (6), sont exécutés sous forme de nœuds marginaux rigides, réalisés par assemblage par matière.

7. Générateur de gaz selon l'une des revendications précédentes, caractérisé par le fait que le tronçon interne (44) de la partie de boîtier délimitant la chambre de réaction (16) en liaison avec le couvercle (14) forme une partie d'un toroïde sensiblement circulaire.